# EUROPEAN PATENT APPLICATION

(11) **EP 4 718 580 A1**
(43) Date of publication of application: **01.04.2026**
(21) Application number: 24896381.1
(22) Date of filing: 20.11.2024
(51) Int. Cl.: H01M 10/613, H01M 10/6567, H01M 10/6568

(54) **BATTERY MODULE AND BATTERY PACK**

(30) Priority: 01.12.2023 CN 202311630704
(71) Applicant: BatteroTech Corporation Limited, Shanghai 201400 (CN)
(72) Inventor: ZHENG, Lin, Shanghai 201400 (CN); SUN, Shiqiang, Shanghai 201400 (CN)
(74) Representative: Vitina, Maruta
(86) International application number: PCT/CN2024/133320
(87) International publication number: WO 2025/113290

(57) **Abstract**

A battery module, including a frame body, a plurality of bare cells, a sealing assembly and a cooling assembly. The frame body internally has an accommodating space. The bare cells are arranged in the accommodating space. The sealing assembly is connected to the frame body, and is configured to seal the accommodating space. The cooling assembly includes a liquid inlet pipe, a liquid inlet connector and a liquid outlet connector. The liquid inlet connector and the liquid outlet connector are provided on the same outer side of the frame body. The liquid inlet pipe is provided inside the accommodating space. One end of the liquid inlet pipe is connected to the liquid inlet connector, and the other end of the liquid inlet pipe extends to a side of the accommodating space away from the liquid inlet connector. The battery module and the battery pack can address the problem that it is difficult to meet the thermal management requirements of batteries.

## Description

### CROSS-REFERENCE TO RELATED APPLICATIONS

This application claims the benefit of priority from Chinese Patent Application No. 202311630704.2, filed on December 1, 2023 and titled "Battery module and battery pack". The content of the aforementioned application, including any intervening amendments thereto, is incorporated herein by reference in its entirety.

### TECHNICAL FIELD

This application relates to batteries, and more particularly to a battery module and a battery pack.

### BACKGROUND

With the advancement of science and technology, the concept of new energy has been increasingly popularized, and the use of new energy batteries has also become more prevalent. During the operation of the existing lithium batteries, the output of electrical energy is accompanied by the generation of a significant amount of heat, leading to a temperature rise. However, excessively high temperatures will easily cause failures of lithium batteries. In this regard, it is necessary to perform thermal management on the lithium batteries.

Current lithium battery products all require fast-charging capabilities. However, it has been found that traditional lithium batteries suffer from at least the following drawbacks: when the fast-charging rate reaches 4C or higher, severe heating will occur in both the battery body and conductors, making air cooling and indirect liquid cooling insufficient to meet the thermal management requirements.

### SUMMARY

An object of the disclosure is to provide a battery module and a battery pack to address the technical problem in the prior art that it is difficult to satisfy the thermal management requirements of batteries.

Technical solutions of the present disclosure are described as follows.

In a first aspect, this application provides a battery module, including:
a frame body;
a plurality of bare cells;
a sealing assembly; and
a cooling assembly;
wherein the frame body internally has an accommodating space;
the plurality of bare cells are arranged within the accommodating space;
the sealing assembly is connected to the frame body, and is configured to seal the accommodating space;
the cooling assembly includes a liquid inlet pipe, a liquid inlet connector and a liquid outlet connector;
the liquid inlet connector and the liquid outlet connector are provided on an outer side of the frame body, and are located on the same side of the frame body;
the liquid inlet pipe is provided inside the accommodating space; and
a first end of the liquid inlet pipe is connected to the liquid inlet connector, and a second end of the liquid inlet pipe is configured to extend to a side of the accommodating space away from the liquid inlet connector; and the second end of the liquid inlet pipe is configured to be open.

In some embodiments, the liquid outlet connector is provided at a top of an outer sidewall of the frame body.

In some embodiments, the cooling assembly further includes an expansion tank; and the expansion tank is provided at an outlet end of the liquid outlet connector, and is configured to discharge a heat transfer medium.

In some embodiments, the bare cells are cylindrical cells; and the liquid inlet pipe is configured in a corrugated shape to avoid the bare cells.

In some embodiments, a bottom of the frame body is provided with a plurality of positioning grooves;
each of the plurality of positioning grooves is provided with a first sealing gasket; and
the plurality of bare cells are respectively provided in the plurality of positioning grooves, and are configured to press against the first sealing gasket.

In some embodiments, the bottom wall of each of the plurality of positioning grooves is further provided with an accommodating groove; the first sealing gasket is provided in the accommodating groove; and the first sealing gasket is configured to partially protrude out of the accommodating groove.

In some embodiments, a bottom wall of each of the plurality of positioning grooves is provided with an avoidance hole;
the first sealing gasket is annular in shape;
the avoidance hole is aligned with a middle of the first sealing gasket;
a bottom of each of the plurality of bare cells is provided with an explosion-proof valve; and
the explosion-proof valve is configured to be exposed through the avoidance hole.

In some embodiments, the sealing assembly includes a wire harness board, a conductive busbar and an output terminal;
the conductive busbar is integrated within the wire harness board;
the conductive busbar is provided with an electrical connection portion electrically connected to the plurality of bare cells;
the wire harness board is provided with an avoidance groove configured to allow the electrical connection portion to be exposed;
the electrical connection portion is weldedly connected to terminals of the plurality of bare cells;
the conductive busbar is electrically connected to the output terminal; and
the output terminal is provided on a side of the wire harness board for outputting electrical energy.

In some embodiments, the wire harness board is provided with a limiting groove; a plurality of positioning structures are provided in the limiting groove; and the limiting groove is configured to accommodate a top of each of the plurality of bare cells.

In some embodiments, the battery module further includes a second sealing gasket;
wherein the second sealing gasket is configured to be pressed between the sealing assembly and the frame body.

In a second aspect, this application provides a battery pack, including:
the battery module described above;
wherein the battery pack has all the functions of the battery module.

Compared to the prior art, the present disclosure has the following beneficial effects.

During operation of the battery, a heat transfer medium is introduced through the liquid inlet connector and guided into the accommodating space via the liquid inlet pipe, such that the plurality of bare cells are immersed in the heat transfer medium. In this way, the bare cells are directly subj ected to thermal management, thereby improving the efficiency of thermal management of the bare cells and meeting the thermal management requirements of the battery module with high heat generation. In particular, since the liquid inlet pipe is configured to extend from a side of the liquid inlet connector to the side of the accommodating space away from the liquid inlet connector, and the liquid outlet connector and the liquid inlet connector are provided on the outer side of the frame body, and are located on the same side of the frame body, the heat transfer medium introduced through the liquid inlet pipe is forced to flow out from the side of the accommodating space away from the liquid outlet connector. This arrangement prevents the heat transfer medium from being discharged through the liquid outlet connector immediately after entering the accommodating space, while allowing the heat transfer medium to fully exchange heat with the bare cells, thereby improving heat exchange efficiency and enhancing thermal management performance, such that the technical problem in the prior art that it is difficult to satisfy the thermal management requirements of the batteries can be further overcome.

Furthermore, the expansion tank is provided at the outlet end of the liquid outlet connector, which can provide a buffer for the heat transfer medium by expansion when a pressure of the heat transfer medium becomes excessive, thereby preventing the frame body from being damaged due to increased pressure and also reducing the risk of sealing failure.

In addition, by integrating the conductive busbar within the wire harness board, the conductive busbar and the wire harness board form an integral unit, which facilitates sealing of the accommodating space. Moreover, this configuration allows for convenient thermal-electrical separation, such that in the case of thermal runaway, substances ejected from the explosion-proof valves of the bare cells are isolated from the terminals of the bare cells, thereby improving the safety of the battery module and the battery pack.

### BRIEF DESCRIPTION OF THE DRAWINGS

In order to illustrate the technical solutions in the present disclosure more clearly, the accompanying drawings needed in the description of the embodiments will be briefly described below. It is evident that presented in the following accompanying drawings are only some embodiments of the present disclosure, instead of all embodiments. For those of ordinary skill in the art, other accompanying drawings can be obtained based on these accompanying drawings without making creative effort.
Fig. 1 is a structural diagram of a battery module according to an embodiment of the present disclosure;
Fig. 2 is an exploded view of the battery module according to an embodiment of the present disclosure;
Fig. 3 is an enlarged view of portion "A" in Fig. 2;
Fig. 4 is an enlarged view of portion "B" in Fig. 2;
Fig. 5 is a structural diagram of a sealing assembly according to an embodiment of the present disclosure; and
Fig. 6 is an enlarged view of portion "C" in Fig. 5.

In the figures: 10-battery module; 100-frame body; 101-accommodating space; 110-positioning groove; 111-first sealing gasket; 112-avoidance hole; 200-bare cell; 210-terminal; 300-sealing assembly; 310-wire harness board; 311-avoidance groove; 320-conductive busbar; 321-electrical connection portion; 3211-through hole; 322-negative connection portion; 330-output terminal; 340-positioning structure; 341-limiting groove; 400-cooling assembly; 410-liquid inlet connector; 411-liquid inlet pipe; 420-liquid outlet connector; 421-expansion tank; and 500-second sealing gasket.

### DETAILED DESCRIPTION OF EMBODIMENTS

In order to make the objects, technical solutions and advantages of the present disclosure clearer, the present disclosure will be described clearly and completely below in conjunction with the accompanying drawings and embodiments. Obviously, described herein are merely some embodiments of the present disclosure, rather than all embodiments. The components of embodiments of the present disclosure shown in the accompanying drawings may be arranged and designed in many different configurations.

Thus, the following detailed description of embodiments of the present disclosure provided in the accompanying drawings is not intended to limit the scope of the present disclosure, but rather represents selected embodiments of the present disclosure. Based on the embodiments in the present disclosure, all other embodiments obtained by those of ordinary skill in the art without making creative effort shall fall within the scope of the present disclosure defined by the appended claims.

It should be noted that similar reference numerals and letters in the following accompanying drawings indicate similar items. Therefore, once an item has been defined in one drawing, it does not require to further define or explain such item in the subsequent drawings.

As used herein, orientation or positional relationships indicated by terms "center", "up", "down", "left", "right", "vertical", "horizontal", "inner" and "outer" are based on the orientation or positional relationships shown in the accompanying drawings. These terms are solely for the convenience of describing the present disclosure, and are not intended to indicate or imply that the devices or components must have specific orientations or be constructed and operated in specific orientations. Therefore, these terms should not be understood as limitations of the present disclosure.

As used herein, terms "first", "second" and "third" are merely used to distinguish technical features, rather than indicating or implying their relative importance.

The terms "horizontal", "vertical" and "pendant" do not require that the components be perfectly horizontal, vertical, or pendant. Rather, such terms are intended to indicate a general orientation. For example, "horizontal" merely means an orientation more horizontal relative to "vertical" and does not require the structure to be exactly horizontal; slight deviations or inclinations are permissible.

It should also be noted that, unless otherwise specifically defined, as used herein, terms "arranged", "mounted", "coupled" and "connected" are to be broadly understood. For example, these terms may refer to fixed connections, detachable connections, or integral connections; mechanical connections, electrical connections, direct connections or indirect connections through intermediate media; or communication between two components internally. For those of ordinary skill in the art, the specific meaning of these terms in the present disclosure can be understood based on the particular context.

It should be noted that, unless otherwise indicated or contradictory, the features of the embodiments of the present disclosure can be combined with each other.

The battery module provided by embodiments of the present disclosure will be described in detail below.

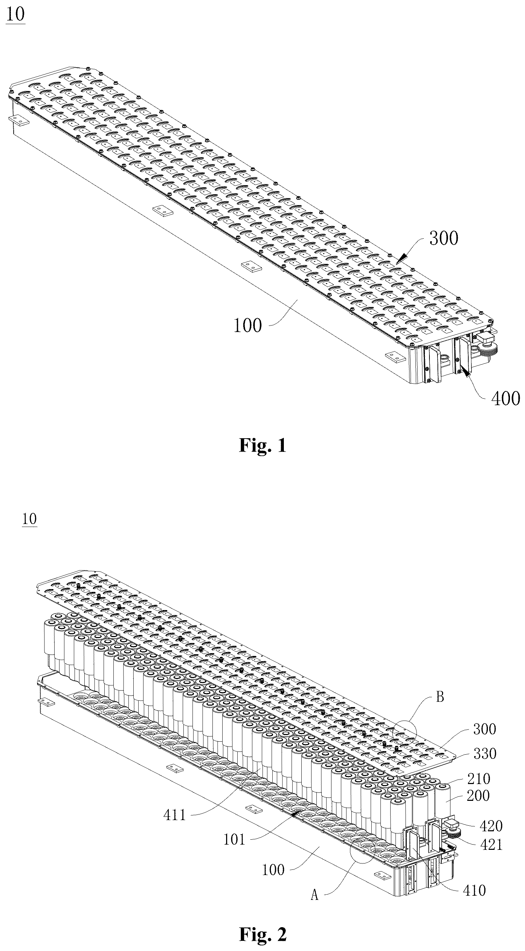

Fig. 1 illustrates an overall structure of the battery module of the present disclosure.

As shown in Fig. 1, an embodiment of the present disclosure provides a battery module 10 for storing electrical energy. The battery module 10 can supply electrical energy to an electrically-powered device after connected thereto. In particular, the battery module 10 provided herein can address the technical problem in the prior art that it is difficult to satisfy the thermal management requirements of batteries.

Fig. 2 is an exploded view of the battery module 10 of the present disclosure.

As shown in Fig. 2, the battery module 10 includes a frame body 100, a plurality of bare cells 200, a sealing assembly 300 and a cooling assembly 400. The frame body 100 internally has an accommodating space 101. The plurality of bare cells 200 are arranged within the accommodating space 101. The sealing assembly 300 is connected to the frame body 100, and is configured to seal the accommodating space 101. The cooling assembly 400 includes a liquid inlet pipe 411, a liquid inlet connector 410 and a liquid outlet connector 420. The liquid inlet connector 410 and the liquid outlet connector 420 are provided on an outer side of the frame body 100, and are located on the same side of the frame body 100. The liquid inlet pipe 411 is provided inside the accommodating space 101. A first end of the liquid inlet pipe 411 is connected to the liquid inlet connector 410, and a second end of the liquid inlet pipe 411 is configured to extend to a side of the accommodating space 101 away from the liquid inlet connector 410. The second end of the liquid inlet pipe 411 is configured to be open.

During operation of the battery, a heat transfer medium is introduced through the liquid inlet connector 410 and guided into the accommodating space 101 via the liquid inlet pipe 411, such that the plurality of bare cells 200 are immersed in the heat transfer medium. In this manner, the bare cells 200 are directly subjected to thermal management, thereby improving the efficiency of the thermal management of the bare cells 200 and meeting the thermal management requirements of the battery module 10 having high heat generation. Specifically, since the liquid inlet pipe 411 is configured to extend from a side of the liquid inlet connector 410 to the side of the accommodating space 101 away from the liquid inlet connector 410, and the second end of the liquid inlet pipe 411 is configured to be open, while the liquid outlet connector 420 and the liquid inlet connector 410 are provided the outer side of the frame body 100 and, are located on the same side of the frame body 100, the heat transfer medium introduced through the liquid inlet pipe 411 is forced to flow out from the side of the accommodating space 101 away from the liquid outlet connector 420. This configuration prevents the heat transfer medium from being discharged through the liquid outlet connector 420 immediately upon entering the accommodating space 101, while allowing the heat transfer medium to fully exchange heat with the bare cells 200, thereby improving the heat exchange efficiency and enhancing the thermal management performance, such that the technical problem in the prior art that it is difficult to satisfy the thermal management requirements of the batteries can be further overcome.

It should be noted that, when the heat transfer medium is a liquid, after being introduced into the accommodating space 101 from the liquid inlet pipe 411, the heat transfer medium accumulates in the accommodating space 101 until the liquid level of the heat transfer medium in the accommodating space 101 reaches an opening of the liquid outlet connector 420 on the frame body 100, and then is discharged from the liquid outlet connector 420. Since the liquid inlet pipe 411 is configured to extend to the side of the accommodating space 101 away from the liquid outlet connector 420, the heat transfer medium is required to flow across the accommodating space 101 from the side of the accommodating space 101 away from the liquid outlet connector 420 to the liquid outlet connector 420 before being discharged, thereby enabling sufficient contact between the heat transfer medium and the bare cells 200, and thus achieving the purpose of improving heat exchange efficiency. In addition, in this embodiment, the liquid inlet pipe 411 and the liquid inlet connector 410 are communicated with each other to form a channel structure penetrating through a peripheral wall of the frame body 100. A sealing structure is provided between the channel structure and the peripheral wall of the frame body 100 to realize sealing between the channel structure and the peripheral wall of the frame body 100. In some embodiments, the sealing structure is a sealing rubber ring or a sealing coating provided between the channel structure and the peripheral wall of the frame body 100.

In some embodiments, the liquid outlet connector 420 is provided at a top of an outer sidewall of the frame body 100. In particular, when the battery module 10 is normally assembled and placed, the sealing assembly 300 is provided at a top of the battery module 10, and the liquid outlet connector 420 is arranged at the top of the outer sidewall of the frame body 100 means that the liquid outlet connector 420 is located on the outer sidewall of the frame body 100 adjacent to the sealing assembly 300. On this basis, the liquid level of the heat transfer medium in the accommodating space 101 can be kept relatively high, thereby allowing the heat transfer medium in the accommodating space 101 to immerse the plurality of bare cells 200, and thus provide efficient heat exchange to the plurality of bare cells 200.

It should be understood that, in some embodiments, the installation position of the liquid outlet connector 420 can be adjusted according to actual conditions, thereby adjusting the liquid level height of the heat transfer medium in the accommodating space 101.

In addition, in this embodiment, the cooling assembly 400 further includes an expansion tank 421. The expansion tank is provided at an outlet end of the liquid outlet connector 420, and is configured to discharge the heat transfer medium. In general, the expansion tank 421 is in a compressed state, in which an internal space of the expansion tank 421 is relatively small. After a pressure of the heat transfer medium in the accommodating space 101 rises, the expansion tank 421 can increase its volume to absorb the impact force generated by the pressure rise of the heat transfer medium, thereby serving as a buffer. This is advantageous for reducing the impact force applied to each sealing portion of the accommodating space 101, preventing damage to the frame body 100 caused by increased pressure of the heat transfer medium, and also reducing the risk of sealing failure.

In some embodiments, the bare cells 200 are cylindrical cells, and the liquid inlet pipe 411 is corrugated to avoid interference with the bare cells 200. In this embodiment, the plurality of bare cells 200 are arranged in a plurality of rows, with two adjacent rows of bare cells 200 staggered relative to each other, thereby increasing the number of bare cells 200 that can be accommodated in the accommodating space 101. On this basis, the liquid inlet pipe 411 is configured as corrugated, which facilitates routing the liquid inlet pipe 411 through gaps between the two adjacent rows of bare cells 200, thereby simplifying the arrangement of the liquid inlet pipe 411.

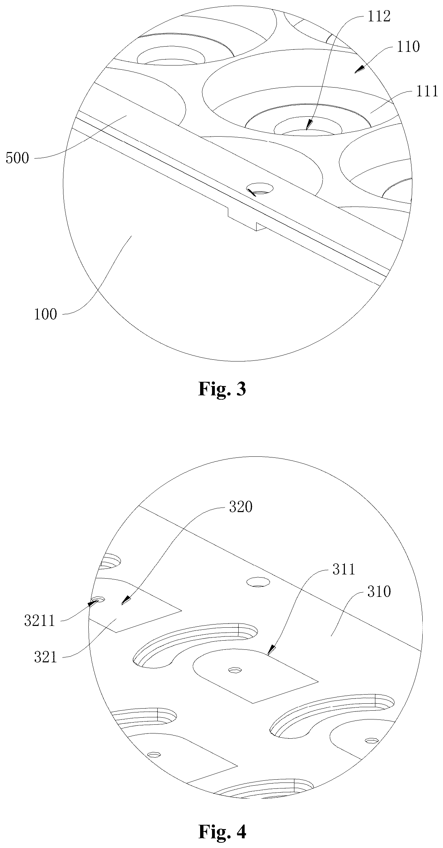

Fig. 3 is an enlarged view of portion "A" in Fig. 2.

Referring to Figs. 2-3, to facilitate installation of the bare cells 200 in the accommodating space 101, a bottom of the frame body 100 is provided with a plurality of positioning grooves 110. Each of the positioning grooves 110 is provided with a first sealing gasket 111. The plurality of bare cells 200 are respectively provided in the plurality of positioning grooves 110, and are configured to press against the first sealing gasket 111. The plurality of positioning grooves 110 is provided at the bottom of the frame body 100, such that the bare cells 200 are accurately positioned during installation, thereby improving the assembly efficiency and assembly precision of the bare cells 200. Furthermore, each of the positioning grooves 110 is provided with the first sealing gasket 111, thereby enhancing the sealing performance between bottoms of the bare cells 200 and bottom walls of the positioning grooves 110.

In addition, to facilitate the placement of the first sealing gasket 111, a bottom wall of each of the positioning grooves 110 is provided with an accommodating groove (not shown in the figures). The first sealing gasket 111 is provided in the accommodating groove. The first sealing gasket 111 is configured to partially protrude out of the accommodating groove. The accommodating groove is an annular groove formed in the bottom wall of each positioning groove 110. When the first sealing gasket 111 is provided in the accommodating groove, the accommodating groove is configured to position and limit the first sealing gasket 111, ensuring the stability of the first sealing gasket 111. By allowing the first sealing gasket 111 to partially protrude out of the accommodating groove, the bare cells 200 can compress the first sealing gasket 111 when inserted into the positioning grooves 110, thereby ensuring stable contact between the first sealing gasket 111 and the bare cells 200, and enhancing the sealing performance. It is noteworthy that a thickness of the first sealing gasket 111 provided in each positioning groove 110 can be adjusted by modifying a depth of the accommodating groove, thereby allowing the sealing performance to be conveniently tuned by adjusting the thickness of the first sealing gasket 111.

Further, the bottom wall of each positioning groove 110 is provided with an avoidance hole 112. The first sealing gasket 111 is annular in shape. The avoidance hole 112 is aligned with a middle of the first sealing gasket 111. A bottom of each bare cell 200 is provided with an explosion-proof valve. The explosion-proof valve is configured to be exposed through the avoidance hole 112. By providing the avoidance hole 112, high-temperature substances can be ejected from the frame body 100 during thermal runaway of the bare cells 200, thereby preventing thermal propagation within the frame body 100. The first sealing gasket 111 is arranged to seal the area around the bottoms of the bare cells 200 and the avoidance hole 112, preventing the heat transfer medium in the accommodating space 101 from leaking through the avoidance hole 112.

In addition, the battery module 10 further includes a second sealing gasket 500. The second sealing gasket 500 is configured to be pressed between the sealing assembly 300 and the frame body 100. The second sealing gasket 500 is provided to enhance the sealing performance between the sealing assembly 300 and the frame body 100, thereby preventing leakage of the heat transfer medium.

Fig. 4 is an enlarged view of portion "B" in Fig. 2.

Referring to Figs. 2 and 4, the sealing assembly 300 includes a wire harness board 310, a conductive busbar 320 and an output terminal 330. The conductive busbar 320 is integrated within the wire harness board 310. The conductive busbar 320 is provided with an electrical connection portion 321 electrically connected to the bare cells 200. The wire harness board 310 is provided with an avoidance groove 311 configured to allow the electrical connection portion to be exposed. The electrical connection portion 321 is weldedly connected to terminals 210 of the bare cells 200. The conductive busbar 320 is electrically connected to the output terminal 330. The output terminal 330 is provided on a side of the wire harness board 310 for outputting electrical energy.

In some embodiments, the conductive busbar 320 is embedded within the wire harness board 310 by insert molding. In other words, the conductive busbar 320 is placed into a mold, and molding material is injected into the mold to encapsulate the conductive busbar 320 within the wire harness board 310, such that the conductive busbar 320 is embedded within the wire harness board 310. The output terminal 330 is provided at two ends of the wire harness board 310 along a length direction of the wire harness board 310.

By integrating the conductive busbar 320 within the wire harness board 310, the conductive busbar 320 and the wire harness board 310 form an integral structure, which facilitates sealing of the accommodating space 101. In addition, this arrangement enables convenient thermal-electrical isolation, such that in the case of thermal runaway, substances ejected from the explosion-proof valve of the bare cells 200 are isolated from the terminals 210 of the bare cells 200, thereby improving the safety of the battery module 10 and the battery pack.

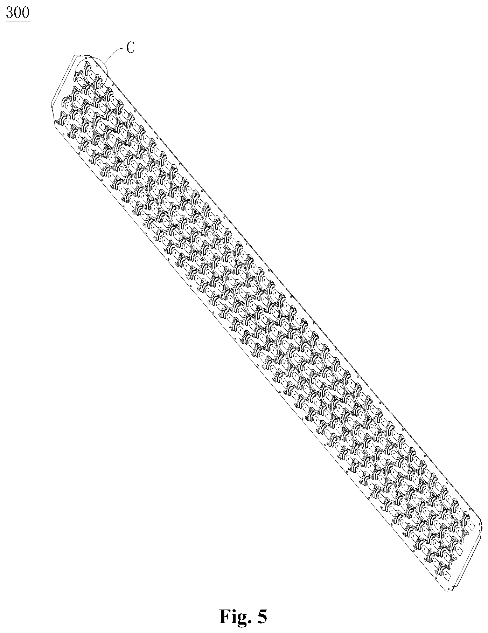

Fig. 5 is a structural diagram of the sealing assembly 300.

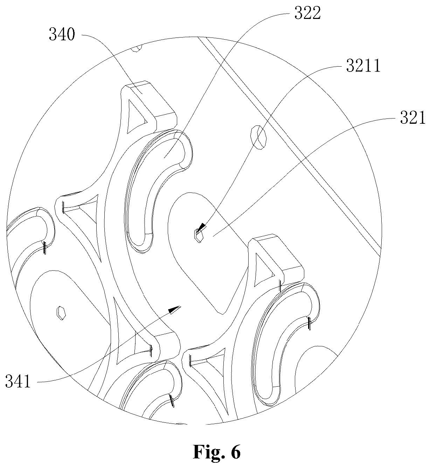

Fig. 6 is an enlarged view of portion "C" in Fig. 5.

Referring to Figs. 5-6, when the sealing assembly 300 is assembled on the frame body 100, the electrical connection portion 321 of the conductive busbar 320 is aligned with the terminals 210 of the bare cells 200. The electrical connection portion 321 is provided with a through hole 3211 configured to allow the terminals 210 of the bare cells 200 to be exposed. After the sealing assembly 300 is mounted on the frame body 100, the terminals 210 are weldedly connected to the electrical connection portion 321 by laser welding. At the same time, after welding is completed, the welding connection between the terminals 210 and the electrical connection portion 321 seals the through hole 3211, thereby achieving sealing at the terminals 210 of the bare cells 200. This eliminates the need for an additional sealing structure, thereby reducing assembly costs. In addition, a location of the conductive busbar 320 adjacent to the electrical connection portion 321 is provided with a negative connection portion 322 protruding downward. After assembly is completed, the negative connection portion 322 is configured to contact the negative poles of the bare cells 200 to achieve electrical connection.

In this embodiment, the wire harness board 310 is provided with a limiting groove 341, in which a plurality of positioning structures 340 are provided. The limiting groove 341 is configured to accommodate a top of each of the plurality of bare cells. It is noted that the positioning structures 340 have an insulating function, which not only provide positioning for the corresponding bare cells 200, but also achieve insulating separation between adjacent bare cells 200.

Based on the above-described battery module 10, the present disclosure further provides a battery pack (not shown in the figures), which adopts the battery module 10 described above. Accordingly, the battery pack provided herein can also address the technical problem in the prior art that it is difficult to satisfy the thermal management requirements of the battery.

It is noted that, in the battery pack, a plurality of battery modules 10 may be provided. Any two adjacent battery modules 10 may be electrically connected via the output terminals 330 and busbars, such that the plurality of battery modules 10 can be uniformly managed in terms of power.

In summary, during operation of the battery, a heat transfer medium is introduced via the liquid inlet connector 410 and guided into the accommodating space 101 through the liquid inlet pipe 411, such that the plurality of bare cells 200 are immersed in the heat transfer medium. In this way, the bare cells 200 are directly subjected to thermal management, thereby improving the efficiency of thermal management of the bare cells 200 and meeting the thermal management requirements of the battery module 10 with high heat generation. In particular, since the liquid inlet pipe 411 is configured to extend from a side of the liquid inlet connector 410 to the side of the accommodating space 101 away from the liquid inlet connector 410, while the liquid outlet connector 420 and the liquid inlet connector 410 are provided the outer side of the frame body 100 and, are located on the same side of the frame body 100, the heat transfer medium introduced through the liquid inlet pipe 41 is forced to flow out from the side of the accommodating space 101 away from the liquid outlet connector 420. This configuration prevents the heat transfer medium from being discharged through the liquid outlet connector 420 immediately upon entering the accommodating space 101, while allowing the heat transfer medium to fully exchange heat with the bare cells 200, thereby improving the heat exchange efficiency and enhancing the thermal management performance, which in turn addresses the technical problem in the prior art that it is difficult to satisfy the thermal management requirements of the batteries.

Furthermore, the expansion tank 421 is provided at the outlet end of the liquid outlet connector 420, which can provide a buffer for the heat transfer medium by expansion in the case of an excessive pressure increase, thereby preventing damage to the frame body 100 due to excessive pressure of the heat transfer medium and reducing the risk of sealing failure.

In addition, by integrating the conductive busbar 320 within the wire harness board 310, the conductive busbar 320 and the wire harness board 310 form an integral structure, which facilitates sealing of the accommodating space 101, Moreover, this configuration allows for convenient hot spots separation, such that in the case of thermal runaway, substances ejected from the explosion-proof valves of the bare cells 200 are isolated from the terminals 210 of the bare cells 200, thereby improving the safety of the battery module 10 and the battery pack.

In some embodiments, referring to Fig. 1, Fig. 1 illustrates a structural diagram of an external perspective of the battery module 10. The battery module 10 includes the frame body 100, the sealing assembly 300 provided on the top of the frame body 100, and the cooling assembly 400 extending from the frame body 100. In addition, the battery module 10 further includes the plurality of bare cells 200 (since the bare cells 200 are located inside the frame body 100, they are concealed in Fig. 1, which shows only the external perspective of the battery module 10).

Referring to Fig. 2, the battery module 10 illustrated in Fig. 2 includes the frame body 100, the plurality of bare cells 200, the sealing assembly 300 and the cooling assembly 400. The frame body 100 internally has the accommodating space 101. The plurality of bare cells 200 are arranged within the accommodating space 101. Each bare cell 200 is provided with the terminal 210. The sealing assembly 300 is connected to the top of the frame body 100, and is configured to seal the accommodating space 101, thereby concealing the bare cells 200. The sealing assembly 300 includes the output terminal 330 for outputting electric power. The cooling assembly 400 includes the liquid inlet pipe 411, the liquid inlet connector 410 and the liquid outlet connector 420. The liquid inlet connector 410 and the liquid outlet connector 420 are provided the outer side the frame body 100, and are located on the same side of the frame body 100. The liquid inlet pipe 411 is provided inside the accommodating space 101. The first end of the liquid inlet pipe 411 is connected to the liquid inlet connector 410, and the second end of the liquid inlet pipe 411 is configured to extend to the side of the accommodating space 101 away from the liquid inlet connector 410. The second end of the liquid inlet pipe 411 is configured to be open. In addition, the expansion tank 421 is provided at the outlet end of the liquid outlet connector 420. The expansion tank 421 is configured to discharge the heat transfer medium. Specifically, the expansion tank 421 can buffer the impact of excessive pressure from the heat transfer medium, preventing damage to the frame body 100 and reducing the risk of sealing failure.

Referring to Fig. 3, in the partially enlarged structure of the battery module 10, the battery module 10 further includes the second sealing gasket 500. The second sealing gasket 500 is configured to be pressed between the sealing assembly 300 and the frame body 100, thereby enhancing the sealing performance between the sealing assembly 300 and the frame body 100 and preventing leakage of the heat transfer medium.

Referring to Fig. 4, in the partially enlarged structure of the battery module 10, the sealing assembly 300 includes the wire harness board 310 and the conductive busbar 320. The conductive busbar 320 is integrated within the wire harness board 310. The conductive busbar 320 is provided with the electrical connection portion 321 electrically connected to the bare cells 200. The wire harness board 310 is provided with the avoidance groove 311 configured to allow the electrical connection portion 321 to be exposed. The electrical connection portion 321 is weldedly connected to the terminals 210 of the bare cells 200. The conductive busbar 320 is electrically connected to the output terminal 330. In some embodiments, the conductive busbar 320 is embedded within the wire harness board 310 by insert molding. In other words, the conductive busbar 320 is placed into a mold, and molding material is injected into the mold to encapsulate the conductive busbar 320 within the wire harness board 310, such that the conductive busbar 320 is embedded within the wire harness board 310. The output terminal 330 is provided at two ends of the wire harness board 310 along the length direction of the wire harness board 310.

Referring to Fig. 5, the sealing assembly 300 is generally plate-shaped, and is installed on the top of the frame body 100.

Referring to Fig. 6, in the partially enlarged view of the sealing assembly 300, a location of the conductive busbar 320 adjacent to the electrical connection portion 321 is provided with another negative connection portion 322, which protrudes downward. After assembly, the negative connection portion 322 is configured to contact the negative poles of the bare cells 200 to achieve electrical connection. The plurality of positioning structures 340 are provided on the side of the wire harness board 310 adjacent to the bare cells 200. The positioning structures 340 are configured to enclose the limiting groove 341. The top of each of the bare cells 200 is inserted in the limiting groove 341. It is noteworthy that the positioning structures 340 are made of an insulating material, which not only provides positioning for the corresponding bare cells 200, but also achieves insulating separation between adjacent bare cells 200.

Described embodiments are merely illustrative, and are not intended to limit the scope of the present disclosure. It should be understood that various modifications, changes and replacements made by those skilled in the art without departing from the spirit of the disclosure shall fall within the scope of the present disclosure defined by the appended claims.

### Industrial applicability

In summary, the battery module and the battery pack provided herein exhibit high heat exchange efficiency, strong thermal management capability and excellent safety.

## Claims

1. A battery module, comprising:
a frame body;
a plurality of bare cells;
a sealing assembly; and
a cooling assembly;
**characterized in that** the frame body internally has an accommodating space;
the plurality of bare cells are arranged within the accommodating space;
the sealing assembly is connected to the frame body, and is configured to seal the accommodating space;
the cooling assembly comprises a liquid inlet pipe, a liquid inlet connector and a liquid outlet connector; the liquid inlet connector and the liquid outlet connector are provided on an outer side of the frame body, and are located on the same side of the frame body; the liquid inlet pipe is provided inside the accommodating space; and a first end of the liquid inlet pipe is connected to the liquid inlet connector, and a second end of the liquid inlet pipe is configured to extend to a side of the accommodating space away from the liquid inlet connector.

2. The battery module according to claim 1, **characterized in that** the liquid outlet connector is provided at a top of an outer sidewall of the frame body.

3. The battery module according to claim 1, **characterized in that** the cooling assembly further comprises an expansion tank; and the expansion tank is provided at an outlet end of the liquid outlet connector, and is configured to discharge a heat transfer medium.

4. The battery module according to any one of claims 1-3, **characterized in that** a bottom of the frame body is provided with a plurality of positioning grooves; each of the plurality of positioning grooves is provided with a first sealing gasket; the plurality of bare cells are respectively provided in the plurality of positioning grooves, and are configured to press against the first sealing gasket.

5. The battery module according to claim 4, **characterized in that** the bottom wall of each of the plurality of positioning grooves is further provided with an accommodating groove; the first sealing gasket is provided in the accommodating groove; and the first sealing gasket is configured to partially protrude out of the accommodating groove.

6. The battery module according to claim 4, **characterized in that** a bottom wall of each of the plurality of positioning grooves is provided with an avoidance hole; the first sealing gasket is annular in shape; the avoidance hole is aligned with a middle of the first sealing gasket; and a bottom of each of the plurality of bare cells is provided with an explosion-proof valve; and the explosion-proof valve is configured to be exposed through the avoidance hole.

7. The battery module according to any one of claims 1-3, **characterized in that** the sealing assembly comprises a wire harness board, a conductive busbar and an output terminal; the conductive busbar is integrated within the wire harness board; the conductive busbar is provided with an electrical connection portion electrically connected to the plurality of bare cells; the wire harness board is provided with an avoidance groove configured to allow the electrical connection portion to be exposed; the electrical connection portion is weldedly connected to terminals of the plurality of bare cells; the conductive busbar is electrically connected to the output terminal; and the output terminal is provided on a side of the wire harness board for outputting electrical energy.

8. The battery module according to claim 7, **characterized in that** the wire harness board is provided with a limiting groove; a plurality of positioning structures are provided in the limiting groove; and the limiting groove is configured to accommodate a top of each of the plurality of bare cells.

9. The battery module according to any one of claims 1-3, further comprising:
a second sealing gasket;
wherein the second sealing gasket is configured to be pressed between the sealing assembly and the frame body.

10. A battery pack, comprising:
the battery module according to any one of claims 1-9.
